# EUROPEAN PATENT APPLICATION

(11) **EP 1 780 967 A1**
(43) Date of publication of application: **02.05.2007**
(21) Application number: 05256630.4
(22) Date of filing: 26.10.2005
(51) Int. Cl.: H04L 27/26

(54) **Interference reduction in OFDM communication systems**

(71) Applicant: FUJITSU LIMITED, Kawasaki-shi, Kanagawa 211-8588 (JP)
(72) Inventor: Truelove, Stephen, Ambleside, Cumbria LA22 9PY (GB)
(74) Representative: Hitching, Peter Matthew

(57) **Abstract**

There is provided a method of reducing a risk of interference in a wireless communication system in which a plurality of mutually orthogonal signals are available to a transmitter for simultaneous transmission to one or more receivers, the method comprising: determining (S2) if one said signal wanted by a particular receiver is at risk of substantial interference from one or more other said signals of the plurality of signals; and if the wanted signal is determined to be at risk, using the wanted signal for transmission at a transmission time but not using for transmission at the transmission time at least one of said other signals causing said risk so as to provide a first frequency interval between a centre frequency of the wanted signal and a centre frequency of a next said signal used for transmission at the transmission time, the signals being used at the transmission time comprising at least two signals of the plurality of signals whose respective centre frequencies are spaced apart by a second frequency interval smaller than the first frequency interval (S4). The method is applicable to OFDM systems.

## Description

The present invention relates to communication systems, and particularly to communication systems that are capable of transmitting two or more mutually orthogonal signals simultaneously.

The meaning of the term orthogonal in the context of the present invention may be explained as follows. Typically, in communication systems that transmit such mutually orthogonal signals simultaneously, those signals are combined to form a combination signal for transmission. On reception of the combination signal, the original separate signals are then ideally recoverable. The separate signals may be considered to be mutually orthogonal to one another if a change of some property of one of them effects its recovered signal only, i.e. without affecting any of the other recovered signals. That is, a beneficial result of such orthogonality is the ability to reliably recover such separate signals independently from the combination signal.

FDM (Frequency Division Multiplexing) may, for example, be employed as a multi-carrier modulation technique in systems of the type mentioned above for transmitting a plurality of separate signals simultaneously, the signals having respective substantially non-overlapping frequency spectra distributed over a transmission channel. Further, guard bands may be used between the adjacent spectra to prevent the spectrum of one signal from interfering with another in a combination signal. In this way, it may be possible to employ band-pass filtering techniques to recover the separate signals from the transmitted combination signal.

Other types of communication system which are capable of transmitting two or more mutually orthogonal signals simultaneously are CDMA (Code Division Multiple Access) systems, and TDMA (Time Division Multiple Access) systems.

Radio access systems are examples of wireless communication systems that typically employ the OFDM (Orthogonal Frequency Division Multiplexing) technique as a preferred multi-carrier modulation technique. Existing radio access systems have typically been designed for low mobility applications, i.e. where the system has one or more fixed transmitters, and one or more low mobility receivers. Examples of such systems include: digital broadcast systems, such as Digital Audio Broadcasting (DAB) and Digital Video Broadcasting (DVB); fixed wireless access systems, such as Wi-MAX 802.16d and Hiperman; and wireless local area networks (LAN Wi-Fi).

The OFDM technique enables a plurality of orthogonal signals, known as sub-carriers, to be transmitted simultaneously. The OFDM technique is commonly known to those skilled in the art. The benefits of the OFDM technique are many, including high spectrum efficiency, resistance against multipath interference, and ease of filtering out noise.

The frequency spectrum of a transmitted signal as received at a receiver may be shifted or spread relative to its spectrum on transmission. The effect of such shifting or spreading of signals has lead to some limitations in existing systems, including OFDM systems. Such a shift or spread in frequency may occur for a variety of reasons as follows.

If a receiver is moving at a velocity relative to a transmitter, or vice versa, the frequency spectrum of a signal as received at the receiver may be shifted or spread in frequency relative to its frequency spectrum on transmission due to the Doppler effect.

In certain types of communication system, for example in a radio communication system, a signal may take two or more paths between a transmitter and a receiver, for example due to reflections off buildings or other obstructions. This phenomenon is commonly known as multipath transmission, and ghosted images on a TV channel are an everyday manifestation of this phenomenon. Due to changes in, for example, the atmosphere, the location of obstructions, and the location of the transmitter and/or the receiver, multipath conditions may vary dynamically causing the propagation time of different reflections of a signal to vary dynamically. Such a varying propagation time may be considered to be equivalent to a dynamically changing path length, and therefore to the receiver and transmitter moving with respect to one another. The relative speed at which each path changes its length may be different when observed at the receiver. Therefore, each reflection of a signal may suffer a different Doppler shift. That is, there may occur simultaneously both an upward and a downward shift in frequency, and therefore a spread in frequency, known as a Doppler spread. This Doppler spreading may be more prominent when the receiver is moving at a velocity relative to a transmitter.

In communication systems using multiple orthogonal signals it is possible that two or more signals as received at a receiver may interfere with one another due to spreading and or shifting of their frequency spectra. Such interference may be referred to as adjacent-signal, or inter-signal, interference. In the context of OFDM, Doppler spreading of OFDM sub-carriers may cause adjacent sub-carrier interference, with a resulting degradation in system performance. Therefore, radio link capacity for fast moving terminals (receivers), which will suffer a significant Doppler shift or spread of received signals, may be limited. Sub-carriers operating in high frequency bands, for example at around 3.5 GHz, are more susceptible to Doppler spread than sub-carriers operating at lower frequencies.

US 2001/0055287 discloses an OFDM system in which communication between a stationary terminal such as an on-road terminal and a mobile terminal mounted on an automotive vehicle is performed. The number of sub-carriers used for transmission is decreased evenly across the OFDM channel in accordance with an increase in the moving speed of the mobile terminal to avoid deterioration in communication quality.

EP1115221 discloses a communication system for communication between a road communication station and one or more vehicle-mounted mobile stations in a cell, utilising an OFDM modulation method. After detecting the velocity of a vehicle in the cell, the space between frequencies of the OFDM sub-carriers is increased evenly across the OFDM channel as the detected velocity of the vehicle becomes higher. The average velocity of the vehicles is considered if a plurality of vehicle-mounted mobile stations exists.

The systems of US 2001/0055287 and EP1115221 respond to the phenomenon of frequency shifting and spreading of sub-carriers, and to the associated effect of adjacent sub-carrier interference, by increasing the spacing between used sub-carriers evenly over the whole transmission channel. Therefore, the available bandwidth for transmission is reduced over the whole transmission channel. That is, in previously considered OFDM systems, there is a trade-off between sub-carrier spacing across the OFDM channel and the maximum permitted Doppler shift or spread.

Increasingly, cellular radio systems will need to support terminals operating at high velocities, for example as broadband Internet access on high-speed passenger trains becomes a requirement. Such high velocities may be, for example, between 350 Km/h and 500 Km/h. However, those systems will typically also need to support terminals operating at low velocities within the same cells at the same time. In previously considered OFDM systems, it is not possible to have a common set of OFDM parameters that are optimal for both high and low mobility terminals simultaneously operating across are large frequency range, for example from 450 MHz to 3.5 GHz.

According to an embodiment of a first aspect of the present invention there is provided a method of reducing a risk of interference in a wireless communication system in which a plurality of mutually orthogonal signals are available to a transmitter for simultaneous transmission to one or more receivers, the method comprising: determining if one said signal wanted by a particular receiver is at risk of substantial interference from one or more other said signals of the plurality of signals; and if the wanted signal is determined to be at risk, using the wanted signal for transmission at a transmission time but not using for transmission at the transmission time at least one of said other signals causing said risk so as to provide a first frequency interval between a centre frequency of the wanted signal and a centre frequency of a next said signal used for transmission at the transmission time, the signals being used at the transmission time comprising at least two signals of the plurality of signals whose respective centre frequencies are spaced apart by a second frequency interval smaller than the first frequency interval.

Such a method enables the number of signals used in one part of the transmission channel to be independent of the number of signals used in another part of the transmission channel. Accordingly, the data transmission rate of one section of the transmission channel may be maintained at a higher level than in a similarly sized section of the transmission channel including the reserved risk-causing signal. Accordingly, all other things being equal, a drop in transmission rate need not be the same evenly across the transmission channel. This is advantageous over the previously considered prior-art systems, as those systems respond to such interference by evenly increasing the spacing between signals across the frequency spectrum. Therefore, in those prior-art systems, a drop in transmission rate occurs across that spectrum.

It is possible that the at least two employed signals whose centre frequencies are spaced apart by the second frequency interval may include the wanted signal and one of the risk-causing signals, for example if the wanted signal is determined to have two oppositely adjacent risk-causing signals, only one of them being reserved. Only reserving one signal in that case provides a reduction in interference as one of the two risk-causing signals remains.

Preferably, the at least two signals whose respective centre frequencies are spaced apart by the second frequency interval are signals intended for one of said receivers other than the particular receiver. This is particularly advantageous in a system having, for example, a fast moving receiver and a slow moving receiver. In that case, the slow-moving receiver may be able to use more available signals per section of the frequency spectrum than the fast-moving terminal, thereby causing the fast-moving terminal to suffer a greater loss of sub-carriers over a frequency range than the slow-moving terminal. It is further advantageous for all of the signals intended for use by at least one receiver other than the particular receiver to be used for transmission at the transmission time. In the case of the example system having a fast moving receiver and a slow-moving receiver, all of the sub-carriers intended for the slow-moving receiver can be transmitted, the reserved sub-carriers therefore being sub-carriers of the fast-moving terminal. It is advantageous for receivers not moving quickly to be unaffected by receivers moving quickly, and generally for the operation of one receiver to be unaffected by that of another. This is in contrast to, for example, the already-acknowledged system of EP1115221, in which the spacing between sub-carriers is increased evenly, i.e. for all receivers, dependent on an average velocity of those receivers. That is, in the system of EP1115221, the operation of slow moving terminals is affected by the operation of fast moving terminals.

The respective centre frequencies of all of the available signals are optionally equally spaced apart by a third frequency interval. For example, in the context of OFDM systems, the available signals may be OFDM sub-carriers whose centre frequencies are equally separated apart. The second frequency interval is optionally greater than or equal to the third frequency interval. That is, the at least two employed signals whose centre frequencies are spaced apart by the second frequency interval may be immediately adjacent signals, or signals spaced further apart. Further, the first frequency interval optionally spans across the centre frequency of at least one of the risk-causing signals that is not used for transmission at the transmission time.

Preferably, if it is determined that the aforementioned risk to the wanted signal exists, at least two of said risk-causing signals are not used for transmission at the transmission time. It is clearly advantageous to reserve two risk-causing signals as apposed to only one in terms of reducing the interference suffered by the wanted signal. Those at least two risk-causing signals may both have centre-frequencies higher than the centre frequency of the wanted signal, or may both have centre-frequencies lower than the centre frequency of the wanted signal.

Preferably, the centre frequency of one of the risk-causing signals that is not used for transmission at the transmission time is higher than the centre frequency of the wanted signal, and the centre frequency of another one of the risk-causing signals that is not used for transmission at the transmission time is lower than the centre frequency of the wanted signal. This is advantageous, particularly if those two signals are the only two risk-causing signals. However, if there are further risk-causing signals it is still advantageous to remove one either side in frequency of the wanted signal, preferably equally either side, so as to evenly "protect" the wanted signal from interference.

It is likely that there would be at least a further signal wanted by the particular receiver for transmission at the transmission time. The or each further wanted signal may also be at risk of substantial interference from one or more further risk-causing signals of the plurality of signals. In that case, preferably for each said further wanted signal, at least one of said further risk-causing signals causing the risk to that further wanted signal is not used for transmission at the transmission time. In this way, two or more signals may advantageously be used for transmission to the particular receiver, the risk of interference to each of those signals being reduced. Clearly, it is beneficial to the particular receiver to be able to receive two signals having a reduced risk of suffering interference rather than one.

Preferably, none of the risk-causing signals or the further risk-causing signals is used for transmission at the transmission time. This may enable the wanted and further wanted signals to be each transmitted at the transmission time and reliably received by the particular receiver. Clearly, this is an advantageous result. The transmitted wanted and further wanted signals may be alternate available signals, or groups of alternately spaced available signals. For example, there may be three or more signals wanted by the particular receiver and used for transmission at the transmission time, spaced one from the next by the first frequency interval. Note, however, that "alternate" in this case is not necessarily immediately alternate. For example, there may be two or more reserved (not used) signals between the alternately spaced wanted and further wanted signals. Further there may be a different number of reserved signals between each pair of alternately spaced wanted and further wanted signals.

The available signals may comprise at least one common signal intended for use by each said receiver. In that case, preferably no signal that puts one of the common signals at risk of substantial interference is used for transmission at the transmission time. As the common signals are intended for use by each receiver, they are in effect wanted by the particular receiver. It is therefore beneficial to ensure that the particular terminal may reliably receive the common signals, i.e. without them suffering interference from other signals.

The risk determination is preferably carried out at regular time intervals. The risk of interference to signals may vary dynamically, and in this case it is advantageous to reassess whether such risks exist on a timely basis, so as to optimise system performance, or so as to at least obtain an acceptable level of system performance. For example, at one time many of the receivers may be moving quickly, and at another time all of the receivers may be moving slowly. That is the numbers of fast-moving and slow-moving receivers may vary with time. Therefore, any Doppler interference may also vary with time.

In the case of risk of Doppler interference, the determination preferably involves a consideration of a velocity of the particular receiver relative to the transmitter. For example, the method may comprise obtaining a measure of the velocity of the particular receiver relative to the transmitter, wherein in the risk determination, it is determined that said signal wanted by the particular receiver is at risk of substantial interference from one or more other said signals of the plurality of signals if said measure indicates that the velocity of the particular receiver is above a predetermined threshold.

The method may involve varying the predetermined threshold based on a smallest frequency interval between the centre frequency of at least the wanted signal and the centre frequency of an adjacent signal of the plurality of signals intended to be used for transmission at the transmission time. The threshold may therefore be specific to the particular receiver, i.e. different from one receiver to the next, and dependent on the spacing of the used signals that are intended for that particular receiver. If, for example, the used signals intended for the particular receiver are already well spaced apart, the threshold may be set higher than if they are not already well spaced apart. That is, the further apart those used signals are spaced, the higher the velocity of the particular receiver that may be tolerated before signals, or more signals, need to be reserved.

The available signals may comprise a plurality of links corresponding respectively to the receivers, each said link comprising all of the available signals intended exclusively for its said corresponding receiver. Further, each said link may comprise a plurality of blocks, the blocks each comprising the same number of signals. Preferably, for each said link, the same pattern of signals used and not used for transmission at the transmission time is employed in each block of the link concerned. This may be advantageous for simplification of system design and operation.

The present invention is particularly applicable to an OFDM system, wherein each said signal is an OFDM sub-carrier.

According to an embodiment of a second aspect of the present invention there is provided a transmitter for use in a wireless communication system and operable to transmit a plurality of available mutually orthogonal signals to one or more receivers, the transmitter comprising: risk determination means operable to determine if one said signal wanted by a particular receiver is at risk of substantial interference from one or more other said signals of the plurality of signals; and signal selection means operable, if the wanted signal is determined to be at risk, to use the wanted signal for transmission at a transmission time but to not use for transmission at the transmission time at least one of said other signals causing said risk so as to provide a first frequency interval between a centre frequency of the wanted signal and a centre frequency of a next said signal used for transmission at the transmission time, the signals being used at the transmission time comprising at least two signals of the plurality of signals whose respective centre frequencies are spaced apart by a second frequency interval smaller than the first frequency interval.

According to an embodiment of a third aspect of the present invention there is provided a system comprising the transmitter embodying the aforementioned second aspect of the present invention and at least one such receiver.

According to an embodiment of a fourth aspect of the present invention there is provided a program adapted to be executed by a processor of a transmitter so as to reduce a risk of interference in a communication system in which a plurality of mutually orthogonal signals are available to the transmitter for simultaneous transmission to one or more receivers, the program comprising: a first program portion operable to cause the transmitter to determine if one said signal wanted by a particular receiver is at risk of substantial interference from one or more other said signals of the plurality of signals; and a second program portion operable, if the wanted signal is determined to be at risk, to cause the transmitter to use the wanted signal for transmission at a transmission time but not use for transmission at the transmission time at least one of said other signals causing said risk so as to provide a first frequency interval between a centre frequency of the wanted signal and a centre frequency of a next said signal used for transmission at the transmission time, the signals being used at the transmission time comprising at least two signals of the plurality of signals whose respective centre frequencies are spaced apart by a second frequency interval smaller than the first frequency interval.

According to an embodiment of a fifth aspect of the present invention there is provided a base station for use in a wireless communication system, the base station comprising the transmitter embodying the aforementioned second aspect of the present invention.

According to an embodiment of a sixth aspect of the present invention there is provided a user terminal for use in a wireless communication system, the user terminal comprising the transmitter embodying the aforementioned second aspect of the present invention.

Reference will now be made, by way of example, to the accompanying drawings, in which:
Figure 1 is a schematic diagram of a system 1 of a first embodiment of the present invention.
Figure 2 is a schematic diagram of a system 10 of a second embodiment of the present invention.
Figure 3 is a diagram showing one example of system 10 in use.
Figures 4A, 4B, and 4C are schematic representations of the frequency spectrum of a particular signal 100 as transmitted from a transmitter 2, and as received at two different terminals 14, respectively.
Figure 5 is a schematic diagram of transmitter 2.
Figure 6 is a flow diagram detailing a method embodying the present invention for use in transmitter 2.
Figures 7A, 7B, and 7C are schematic representations of the frequency spectrum of a particular signal 150 as transmitted from a transmitter 2, and as received at two different terminals 14, respectively.
Figure 8 is a schematic diagram of a transmitter 200.
Figures 9 to 15 are schematic representations of example frequency spectra.

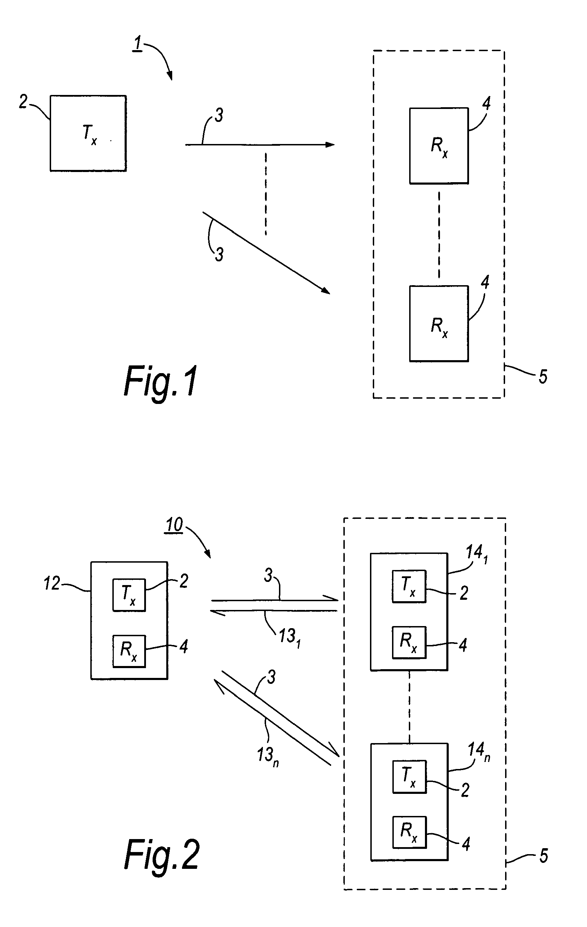

Figure 1 is a schematic diagram of a system 1 of a first embodiment of the present invention. System 1 comprises a transmitter 2, and a plurality of receivers 4. Transmitter 2 is operable to transmit a signal 3 such that it may propagate in a number of different directions so as to form a cell 5 within which receivers 4 may receive the signal 3.

Figure 2 is a schematic diagram of a system 10 of a second embodiment of the present invention. System 10 comprises a base station 12, and a plurality of terminals 14₁ to 14ₙ. The base station 12 and the plurality of terminals 14₁ to 14ₙ each comprise a transmitter 2 and a receiver 4. Similarly to system 1, base station 12 is operable to use its transmitter 2 to transmit a signal 3 to generate a cell 5 within which receivers 4 of terminals 14₁ to 14ₙ may receive the signal 3. However, the terminals 14₁ to 14ₙ are also operable to use their transmitters 2 to transmit respective signals 13₁ to 13ₙ. The transmitters 2 of terminals 14₁ to 14ₙ are therefore also operable to generate cells (not shown) within which base station 12 may exist. Accordingly, system 1 is operable to provide two-way communication between the base station 12 and the plurality of terminals 14₁ to 14ₙ.

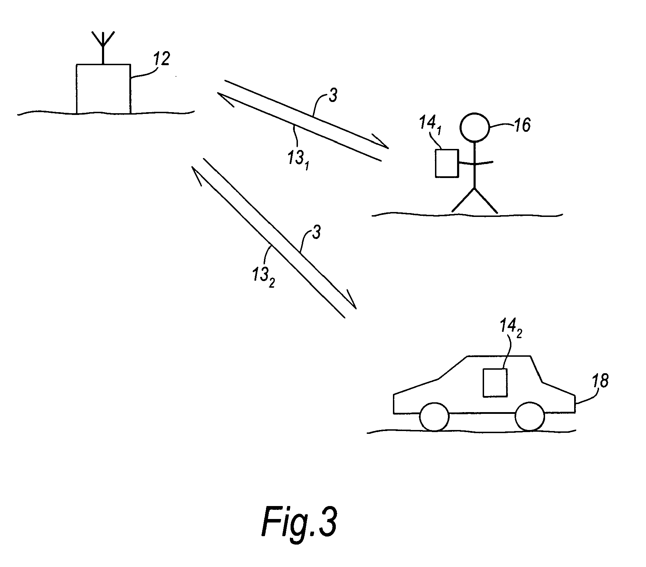

Figure 3 is a diagram showing one example of system 10 in use. Base station 12 is shown as a fixed base station. A user 16 of terminal 14₁ is a low-mobility user, and may for example be a stationary user or a slow-moving pedestrian. Consequently, a relative velocity between terminal 14₁ and base station 12 tends to remain substantially low during transmission of signals 3 and 13₁. A user 18 of terminal 14₂ is a high-mobility user, and may, for example, be a passenger of a moving car, a high-speed train, or an aircraft. User 18 may, for example, travel at speeds of up to 500 Km/h. Consequently, a relative velocity between terminal 14₂ and base station 12 tends to fluctuate between a substantially low level and a substantially high level during transmission of signals 3 and 13₂.

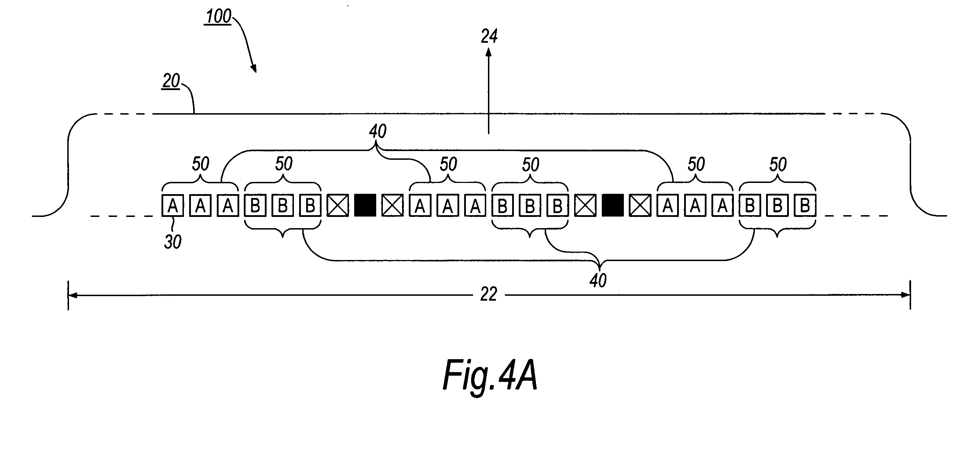

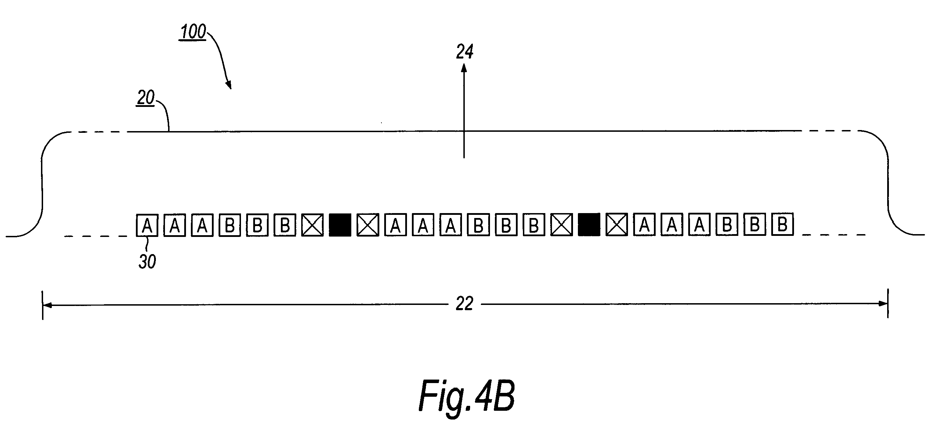

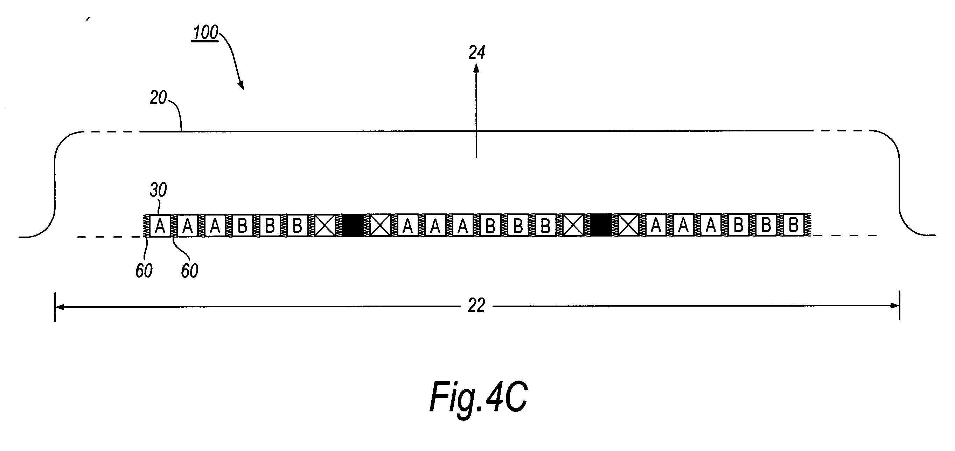

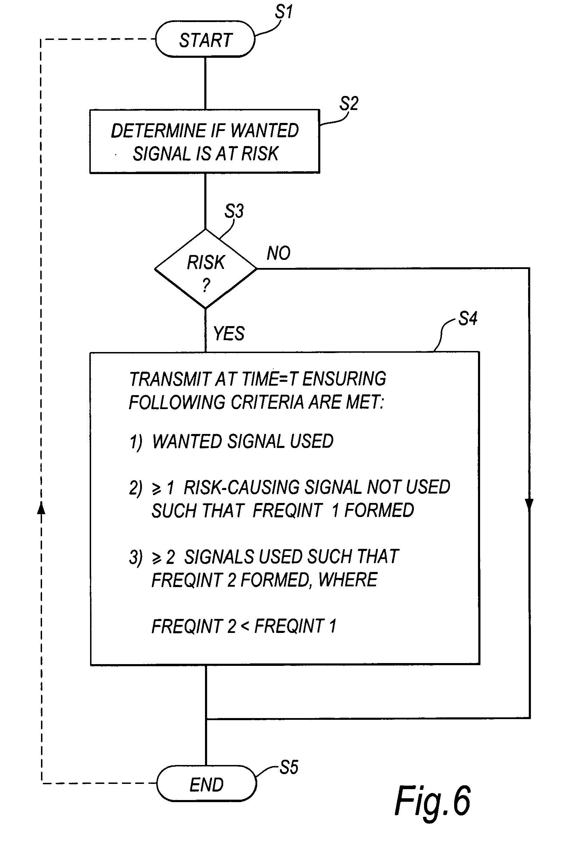

Figure 4A is a schematic representation of the frequency spectrum of a particular signal 100 as transmitted from a transmitter 2 before operation of a method embodying the present invention, which method will be described later in relation to Figure 6. Signal 100 is equivalent to signal 3 of Figure 1. For simplicity, the transmitter 2 will be considered to be the transmitter of base station 12 of system 10 for the following explanation. Figures 4B and 4C are schematic representations of the frequency spectrum of the signal 100 as received at different terminals 14, respectively, of system 10.

Transmitter 2 is operable to use the OFDM technique to transmit a number of sub-carriers (signals) 30 simultaneously, the plurality of sub-carriers being combined to form OFDM signal 100. In other embodiments of the present invention, transmitter 2 may be operable to use a different multi-carrier modulation technique to transmit a plurality of signals simultaneously, the plurality of signals being combined to form signal 3.

The transmitted signal 100 has a transmission channel 20 with a bandwidth 22 and a centre frequency 24. In one example, bandwidth 22 may be 20 MHz, and centre frequency 24 may be between 450 MHz and 3.5 GHz. Of course, the bandwidth 22 and centre frequency 24 of another transmitter embodying the present invention may be differently chosen.

The frequency spectra of the OFDM sub-carriers 30 overlap one another. Therefore, for the benefit of further explanation, the following symbols have been used in Figure 4A, and will be used in other schematic representations of frequency spectra for consistency.

Available sub-carriers 30 are each represented by a box, each box schematically representing the centre frequency, and therefore the approximate bandwidth allocation, of its corresponding sub-carrier within the available bandwidth 22. Generally, a large number of sub-carriers are available in the bandwidth 22. The number of sub-carriers employed tends to vary from one type of system to the next, for example between WiMAX, EUTRAN, and DVB systems, and is usually dependent on the size of the bandwidth 22. The number of sub-carriers employed may, for example, be any of 76, 151, 301, 601, 901, and 1201. Therefore, for simplicity, only a sub-section of the available sub-carriers are represented. A box labelled with a letter, e.g. "A", indicates that its corresponding sub-carrier 30 is currently being used for transmission, and is intended for receipt (wanted) by the receiver 4 of a terminal 14 labelled with the same letter, in the present example by a terminal 14 labelled "A" (hereinafter "Terminal A"). A box labelled with a cross indicates that its corresponding sub-carrier 30 is not currently being used for transmission (i.e. that the sub-carrier is currently reserved). A fully shaded-in box indicates that its corresponding sub-carrier 30 is being used for transmission of a common signal, intended for receipt (wanted) by a receiver 4 of each terminal 14.

In Figure 4A, twenty-four adjacent available sub-carriers 30 of OFDM signal 100 are represented by twenty-four boxes, respectively. The available sub-carriers comprise a plurality of links 40. The sub-carriers of a link are each wanted by the same terminal. For example, the sub-carriers wanted by Terminal A are sub-carriers of the same link. Two links are shown in Figure 4A. The available sub-carriers also comprise a plurality of blocks 50. Each block comprises adjacent sub-carriers wanted by the same terminal. For example each group of adjacent sub-carriers wanted by Terminal A is a block 50 of sub-carriers. Six blocks are shown in Figure 4A.

OFDM sub-carriers are typically grouped together into blocks of carriers to ensure that individual radio links contain several adjacent sub-carriers. Ideally these blocks are distributed across the widest possible bandwidth to achieve good frequency diversity. In practice, the grouping of sub-carriers around a dedicated pilot (a sub-carrier or set thereof used for transmission of a common signal) is likely. This enables the feedback bandwidth required for channel quality information to be minimised, as feedback becomes only necessary from blocks of carriers, rather than from each individual sub-carrier.

Figure 4B is a schematic representation of the frequency spectrum of the signal 100 as received at Terminal A. It is assumed that Terminal A is currently either moving slowly relative to base station 12, or is stationary. For example, Terminal A may be a terminal 14 of low-mobility user 16. Therefore, assuming an ideal transmission channel, the transfer of signal 100 to Terminal A has been ideal. Accordingly, the schematic representation of Figure 4B is identical to that of Figure 4A, and Terminal A is capable of recovering the sub-carriers wanted by it, as well as the common sub-carriers.

Figure 4B may also be considered to be a schematic representation of the frequency spectrum of the signal 100 as received at Terminal B, if it is assumed that Terminal B is also currently either moving slowly relative to base station 12, or is stationary. In that case, Terminal B would, similarly to Terminal A, also be capable of recovering the sub-carriers wanted by it as well as the common sub-carriers.

Figure 4C is a schematic representation of the frequency spectrum of signal 100 as received at Terminal A or B if it is assumed that they are currently moving quickly relative to the base station 12. For the following description, Terminal B will be considered to be moving quickly relative to the base station 12. For example, Terminal B may be a terminal 14 of low-mobility user 18. On this basis, even assuming an ideal transmission channel, the transfer of signal 100 to Terminal B has not been ideal. Due to the relative velocity between Terminal B and the base station 12, Doppler spreading of the signal 100 has occurred. Accordingly, Terminal B experiences adjacent sub-carrier interferences 60 between adjacent used sub-carriers across the transmission channel 20. interferences 60 are shown schematically between every box to indicate the interferences that would be suffered at Terminal B if each available sub-carrier 30 was used at the same time. However, as can be seen from Figure 4C, certain sub-carriers are not used (are reserved) in signal 100, and therefore a used sub-carrier would not suffer such interference from such a reserved signal. In the same way, interferences 60 will be shown between every box on other accompanying schematic representations of frequency spectra.

In signal 100, the common sub-carriers are each situated between two reserved sub-carriers. Terminal B is therefore capable of recovering the common sub-carriers, as there are no adjacent used sub-carriers with which to interfere with the common sub-carriers. However, it is difficult, or even impossible, for Terminal B to recover the sub-carrier signals specifically intended for it due to interference from adjacent used sub-carriers. Clearly, it is disadvantageous for Terminal B not to be able to recover the sub-carriers specifically intended for it. The following description details how system 10 is capable of ensuring that a fast moving terminal 14, such as Terminal B, can receive signals specifically intended for it.

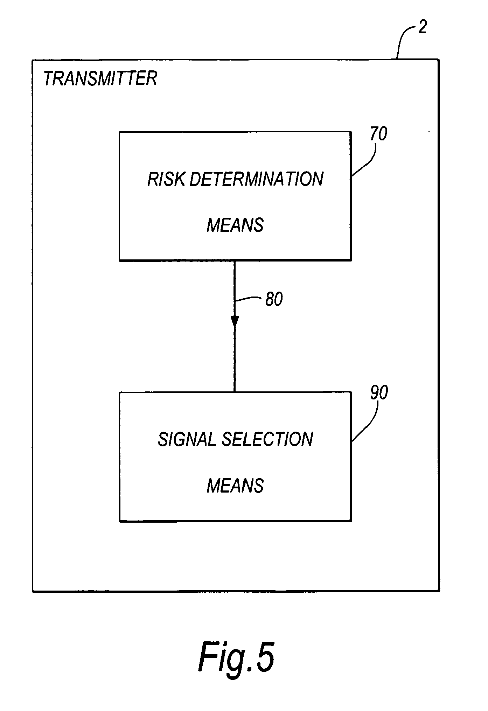

Figure 5 is a schematic diagram of transmitter 2. Transmitter 2 comprises risk determination means 70 and signal selection means 90. Signal selection means 90 is operatively coupled to risk determination means 70 so as to receive a signal 80 therefrom.

Risk determination means 70 is operable to determine if one of the available signals wanted by a particular receiver is at risk of substantial interference from one or more other signals of the plurality of signals. Such interference may be considered to be substantial if it hinders or prevents the particular receiver from recovering the wanted signal.

The signal selection means 90 is operable, if the wanted signal is determined to be at risk, to use the wanted signal for transmission at a transmission time but not use at least one of the other signals causing the risk for transmission at the transmission time so as to provide a first frequency interval between a centre frequency of the wanted signal and a centre frequency of a next signal used for transmission at the transmission time, the signals being used at the transmission time comprising at least two signals of the plurality of signals whose respective centre frequencies are spaced apart by a second frequency interval smaller than the first frequency interval. Signal 80 carries the information necessary to inform the signal selection means 90 if the wanted signal is determined to be at risk.

Figure 6 is a flow diagram detailing a method embodying the present invention for use in transmitter 2. The method starts at step S1, and proceeds to step S2 at which a determination is made as to whether a signal available for transmission and wanted by a particular receiver is at risk of substantial interference from one or more other signals of the plurality of signals available for transmission. This determination may be made in various different ways, which will be described later. The method then proceeds to step S3 at which a decision is made as to whether the wanted signal is determined to be at risk. If the decision has a positive outcome, the method proceeds to step S4. If the decision has a negative outcome, the method proceeds to step S5 at which the method ends.

Step S4 uses the wanted signal for transmission at a transmission time (T) but does not use at least one of said other signals causing said risk for transmission at the transmission time (T) so as to provide a first frequency interval (FREQINT1) between a centre frequency of the wanted signal and a centre frequency of a next signal used for transmission at the transmission time, the signals being used at the transmission time comprising at least two signals of the plurality of signals whose respective centre frequencies are spaced apart by a second frequency interval (FREQINT2) smaller than the first frequency interval.

Following execution of step S4, the method proceeds to step S5, at which the method ends. Optionally, the method may then return to step S1, preferably at regular time intervals.

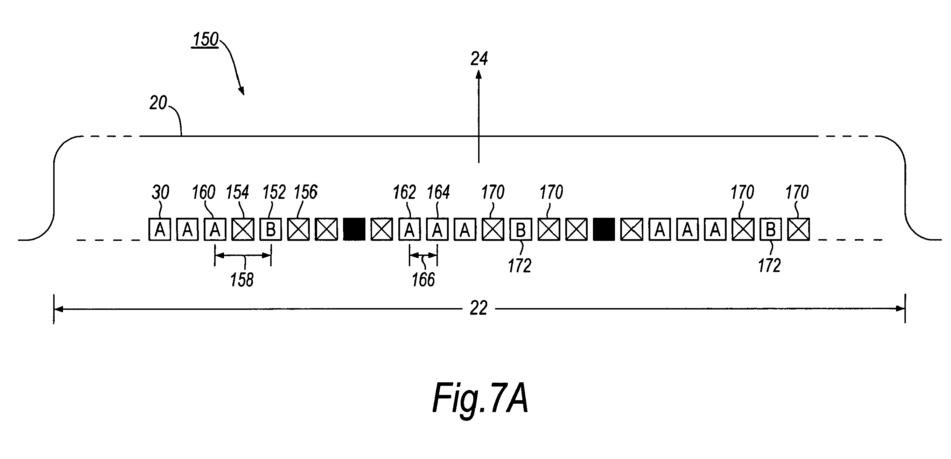

Figure 7A is a schematic representation of the frequency spectrum of a particular signal 150 as transmitted from a transmitter 2. Signal 150 is transmitted at a time T during execution of the method of Figure 6 based on signal 100. Therefore, signal 150 is similar to signal 100, and the differences are due to the operation of the Figure 6 method. For ease of comparison, the same twenty-four adjacent available sub-carriers 30 as represented in Figure 4A for signal 100 are represented for signal 150. Therefore the same links 40 and blocks 50 of available sub-carriers 30 exist (although not explicitly marked on Figure 7A).

As a result of step S2 of the method of Figure 6, it has been determined that there is a risk that a particular sub-carrier 152 (of the available sub-carriers 30) wanted by Terminal B is at risk of substantial interference from particular sub-carriers 154 and 156. That is, it has been determined that, if sub-carriers 152, 154, and 156 were used for transmission at the same time, Terminal B may have trouble extracting data carried over sub-carrier 152 due to interference from sub-carriers 154 and 156. In the present example, the reason that this determination has been made is because it has been determined that Terminal B is, as previously assumed, currently moving quickly relative to the base station 12. Therefore, due to the relative velocity between Terminal B and the base station 12, Doppler spreading of the transmitted signal 150 is likely to occur. That is, Terminal B is likely to experience adjacent sub-carrier interferences 60 between the sub-carriers 30 across the transmission channel 20, similar to those shown in Figure 4C.

As a result of the positive result of step S3 of the method of Figure 6, the method has proceeded to step S4. In step S4, the transmitter 2 transmits signal 150 at time T, in which sub-carrier 152 (the wanted sub-carrier) is used for transmission, but in which sub-carriers 154 and 156 (the risk-causing sub-carriers) are not used for transmission so as to provide a first frequency interval 158 between a centre frequency of the sub-carrier 152 and a centre frequency of sub-carrier 160 (a next sub-carrier used for transmission at time T). Further, in step S4, the transmitter 2 transmits sub-carriers 162 and 164 whose respective centre frequencies are spaced apart by a second frequency interval 166 smaller than the first frequency interval 158.

In summary, it can be seen that the difference between signal 150 as compared to signal 100 is that a number of sub-carriers wanted by Terminal B have been reserved. In particular, sub-carriers 154 and 156 have been reserved, however the same pattern of reservation has been employed in the other blocks relating to sub-carriers wanted by Terminal B. That is, sub-carriers 170 have also been reserved whilst sub-carriers 172 are being used for transmission. Similarly to signal 100, however, all of the sub-carriers wanted by Terminal A are still being used for transmission.

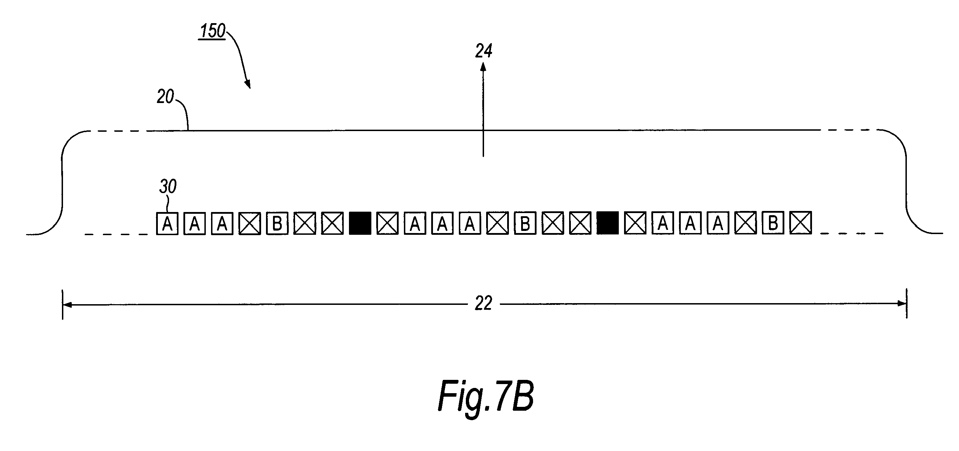

Figure 7B is a schematic representation of the frequency spectrum of the signal 150 as received at Terminal A. It is, as before, still assumed that Terminal A is currently either moving slowly relative to base station 12, or is stationary. Therefore, assuming an ideal transmission channel, the transfer of signal 150 has been ideal. Accordingly, the schematic representation of Figure 7B is identical to that of Figure 7A, and Terminal A is capable of recovering the sub-carriers wanted by it as well as the common sub-carriers.

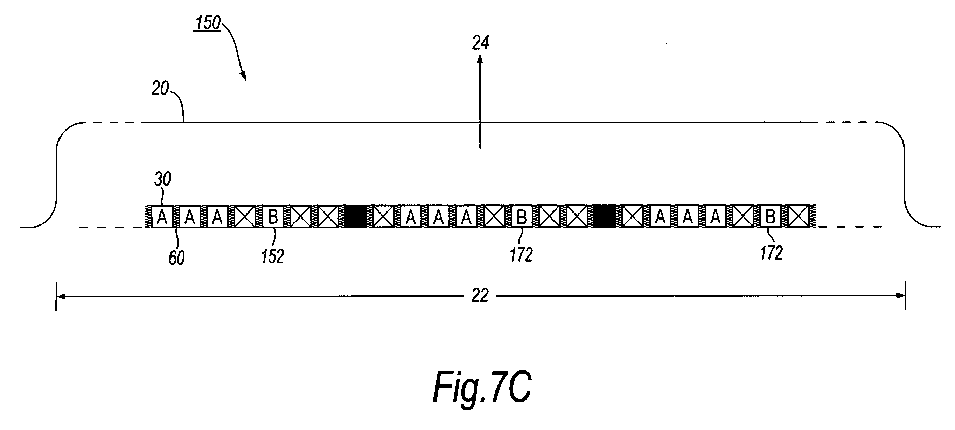

Figure 7C is a schematic representation of the frequency spectrum of signal 150 as received at Terminal B. It is, as before, assumed that Terminal B is currently moving quickly relative to the base station 12. Therefore, even assuming an ideal transmission channel, the transfer of signal 100 has not been ideal. Due to the relative velocity between Terminal B and the base station 12, Doppler spreading of the signal 150 has occurred. Accordingly, Terminal B experiences adjacent sub-carrier interferences 60 between adjacent used sub-carriers across the transmission channel 20.

In signal 150, the common sub-carriers are each situated between two reserved sub-carriers. Terminal B is therefore capable of recovering the common sub-carriers, as there are no adjacent used sub-carriers with which to interfere with the common sub-carriers. Furthermore, in signal 150, sub-carriers 152 and 172 wanted by Terminal B are also each situated between two reserved sub-carriers. Terminal B is therefore also capable of recovering wanted sub-carriers 152 and 172, as there are no adjacent used sub-carriers with which to interfere therewith.

As can be seen from a comparison of Figures 7A to 7C with Figures 4A to 4C, transmitter 2 embodying the present invention is capable of supporting a slow moving terminal 14 (Terminal A) and a fast moving terminal 14 (Terminal B) at the same time without reducing the number of used sub-carriers evenly over the transmission channel. The transmitter 2 is operable to maintain the number of sub-carriers useable by a slow moving terminal 14 (in this case, Terminal A) whilst reducing the number of sub-carriers used by a fast moving terminal 14 (in this case, Terminal B) so as to ensure that at least one sub-carrier wanted by the fast moving terminal can be received thereby. When sub-carriers are required to transmit commonly wanted signals (such as pilot, BCH, etc.), those sub-carriers may be protected from adjacent-sub-carrier interference, such as Doppler interference, by reserving the adjacent sub-carriers (as in signals 100 and 150).

It can be appreciated that a system embodying the present invention, such as system 10, is capable of providing a network with an improved OFDM system capacity for a network containing a small number of high-velocity mobile terminals and a large number of low-velocity mobile terminals, as compared to prior-art systems. Such prior-art systems respond to the presence of high-velocity mobile terminals by increasing the spacing between adjacent used sub-carriers evenly over the whole channel, whereas a system embodying the present invention can respond by reserving sub-carriers wanted by the high velocity terminals without reserving sub-carriers wanted by other terminals of the system. That is, the use of sub-carrier reservation allows high mobility terminals to operate in an OFDM cellular network optimized for maximum throughput for low mobility users.

A system embodying the present invention, such as system 10, is capable of reserving sub-carriers rather than having to increase spacing between available sub-carriers. The OFDM symbol duration may be kept constant irrespective of whether one or more sub-carriers are reserved. This avoids adjacent sub-carrier interference while retaining orthogonality between the sub-carriers. Low-speed terminals may obtain the maximum possible channel throughput by retaining use of their wanted sub-carriers while at the same time allowing other high velocity terminals to operate with the same set of OFDM parameters, but with a reduced set of sub-carriers. Therefore, embodiments of the present invention enable the use of a common set of OFDM parameters, which may be used in all suitable frequency bands (for example in bands ranging from 450 MHz to 3.5 GHz).

When sub-carriers are reserved, higher-order modulation may be used on the remaining sub-carriers based on the radio link quality, thus attempting to restore channel capacity. For example, the information used to determine the risk of interference, e.g. an estimate of the velocity of a terminal, may determine the order of the modulation used on the OFDM sub-carriers used to bear data out of a set of possible modulation methods (e.g. out of 64 QAM, 16 QAM, QPSK or BPSK). This may also be done in conjunction with other channel quality measurements, such as cochannel interference levels. With reasonably good link quality, high order modulation may be used together with greater sub-carrier spacing through reservation thus attempting to maintain channel capacity. However, in the case of very high terminal velocities, and poor link or channel quality, the order of modulation may be reduced to ensure the link (e.g. a radio link) is maintained with the terminal.

Embodiments of the present invention may dynamically reserve OFDM sub-carriers (or equivalent signals in systems using a different modulation technique). That is, the number of sub-carriers reserved at any one time may be varied, for example in response to a change in speed of a terminal. Current or planned sub-carrier reservation may be signalled between the base station and the user equipment (terminals), for example over the physical layer as part of the transport format combination indicator. This may allow changes to be made every radio sub-frame or transmission time interval (TTI). For example, the method of Figure 6 may be executed in every TTI. Of course, such changes may be made and signalled less frequently to reduce associated transmission overhead. A terminal of the system (or a receiver) may therefore be capable of decoding the signal from the base station (e.g. the transport format combination indicator) from a commonly used sub-carrier or set thereof (a set of control channels), or from a dedicated sub-carrier. That signal (e.g. the transport format combination indicator) contains information indicating the sub-carriers used and the type or order of modulation used by the transmitter.

When sub-carriers are used as common channels (such as the pilot, BCH, PCH or HS-SCCH) the sub-carriers adjacent to common channels may be reserved reducing the risk of adjacent sub-carrier interference for high mobility terminals. This reservation of sub-carriers adjacent to commonly used sub-carriers may be made in response to a detected high mobility terminal, or may be a standard set-up of such a system in preparation for the presence of one of more high mobility terminals.

As mentioned hereinbefore, there are various ways in which the risk determination means 70 of transmitter 2 may perform the determination of method step S2. A relative velocity between a base station 12 (comprising a transmitter 2) and a terminal 14 (comprising a receiver 4) is one common example of a cause for sub-carriers transmitted from the transmitter 2 (in a signal 3 from base station 12) and wanted by the receiver 4 (of terminal 14) to suffer interference from adjacent sub-carriers due to Doppler shifting or spreading. Therefore, by obtaining a measure of the relative velocity between the terminal 14 and the base station 12, and then by determining whether that velocity is high enough to cause substantial Doppler interference, the determination of step S2 may be made. A few possible ways in which a measure of the relative velocity of the terminal 14 relative to the base station can be obtained will now be discussed.

Individual terminals 14 may for example measure their own velocity and transmit the information back to the base station 12 for use in the determination process. For example, the individual terminals 14 may possess GPS equipment operable to measure their respective velocities. Alternatively, the individual terminals may be able to measure an amount of Doppler shifting or spreading suffered by signals received from the base station, and thereby obtain an indication of their respective velocities relative to the base station. These methods are considered unattractive, as they require signalling of the velocity information from the individual terminals 14 back to the base station 12.

In the system 10, the base station 12 receives signals 13₁ to 13ₙ from the terminals 14₁ to 14ₙ, respectively. Accordingly, the base station 12 could measure an amount of Doppler shifting or spreading suffered on one or more of the received signals 13₁ to 13ₙ, and thereby obtain an indication of the respective velocities of the one or more of the terminals 14₁ to 14ₙ relative to the base station.

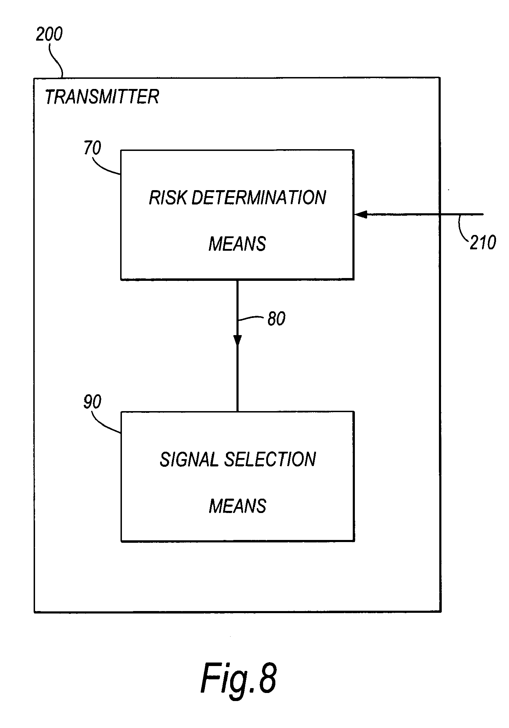

Figure 8 is a schematic diagram of a transmitter 200 interchangeable in system 10 with transmitter 2. Transmitter 200 is similar to transmitter 2 and therefore comprises risk determination means 70 and signal selection means 90. Those parts will therefore not be described further.

Compared to transmitter 2, transmitter 200 is operable to additionally receive a signal 210 indicative of a velocity of one or more receivers 4 relative thereto. Risk determination means 70 of transmitter 200 is operable to employ signal 210 when determining if a signal available for transmission and wanted by a particular receiver is at risk of substantial interference from one or more other signals of the plurality of signals available for transmission.

The risk determination means 70 is operable to perform the determination by comparing a velocity indicated by the received signal 210 with a threshold level. If the velocity is above the threshold, the risk determination means 70 is operable to determine that one or more sub-carriers intended for the terminal having the indicated velocity are at risk of interference from adjacent sub-carriers.

The risk determination means 70 is operable to set a different predetermined threshold in respect of each receiver, based on a number of criteria. For example, a threshold may be set based on a smallest frequency interval between the centre frequency of one sub-carrier wanted by a particular receiver and intended to be used for transmission at time T, and the centre frequency of an adjacent sub-carrier of the plurality of signals intended to be used for transmission at the transmission time.

Alternatively, a threshold may be set based on a smallest frequency interval between the centre frequency of each respective sub-carrier wanted by a particular receiver and intended to be used for transmission at time T and the centre frequency of respective adjacent sub-carriers of the plurality of signals intended to be used for transmission at the transmission time.

Alternatively, a number of thresholds may be set per terminal such that a velocity of each terminal relative to the base station may be assessed to be above one or more predetermined velocities associated with the thresholds.

Accordingly, by use of such thresholds, each terminal 14 of system 10 may be capable of reliably receiving at least one wanted sub-carrier at transmission time T, or at least one wanted sub-carrier per block. Alternatively, each terminal 14 may be capable of reliably receiving a maximum number of wanted sub-carriers.

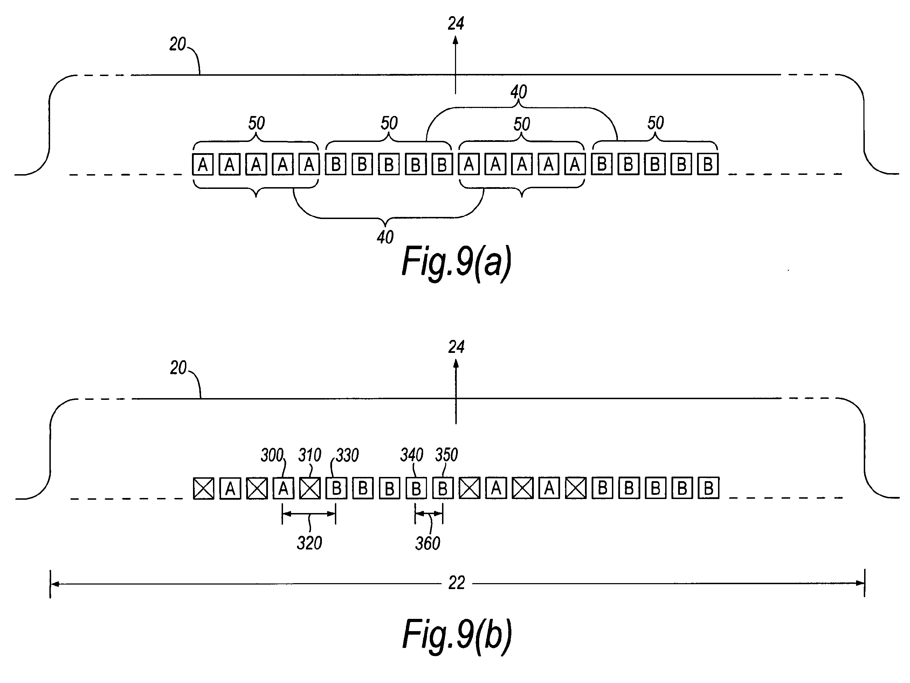

For a better understanding of the invention, a number of examples of how sub-carriers available to transmitter 2 or 200 may be reserved in accordance with the method of Figure 6 will now be described in relation to Figures 9 to 15. In each of those figures, two schematic representations of frequency spectra are provided, denoted as (a) and (b). The first one, (a), corresponding to a signal transmitted before execution of the Figure 6 method, and the second one, (b), corresponding to a signal transmitted at time T in the Figure 6 method. Further, in each of those figures, it can be appreciated by a comparison of frequency spectrum (b) with frequency spectrum (a) that, by operation of the Figure 6 method, a wanted sub-carrier 300 has been identified and is being used, and that a risk-causing sub-carrier 310 has been reserved, thereby providing a first frequency interval 320 between the centre frequency of the wanted sub-carrier 300 and the centre frequency of a next used sub-carrier 330. It can be further appreciated that, in the frequency spectrum (b) of each of those figures, there are at least two used sub-carriers 340 and 350 whose centre frequencies are separated apart by a second frequency interval 360 smaller than the first frequency interval 320. It will be appreciated that more sub-carriers may have been reserved than just sub-carrier 310 in some of those figures to provide desirable system performance.

In Figure 9 four blocks 50 of five sub-carriers are available for transmission, alternate pairs of those blocks each forming a link 40. Terminal A has been identified as being a fast moving terminal, and accordingly at least one sub-carrier 300 is used in spectrum (b) and at least one sub-carrier 310 has been reserved. However, it can be seen that in each block of sub-carriers in the link intended for Terminal A, three alternate sub-carriers have been reserved, leaving two sub-carriers remaining used. It can also be seen that each of the sub-carriers of the link intended for Terminal B has been maintained. That is, Terminal B has suffered no reduction in its downlink capability as a result of the execution of the Figure 6 method. Note that the pattern of reservation of sub-carriers is optionally, but preferably, the same in each block of sub-carriers for consistency across the spectrum. Further, note that with blocks of an odd number of carriers, a desirable reservation pattern is to reserve alternate sub-carriers including the two edge sub-carriers of the block, so as not to affect sub-carriers of other blocks. This is desirable because a fast moving terminal experiences the drop in number of used sub-carriers without a slow moving terminal having to. Also, due to the operation of the Figure 6 method in this case, each terminal is capable of receiving the maximum number of sub-carriers without interference.

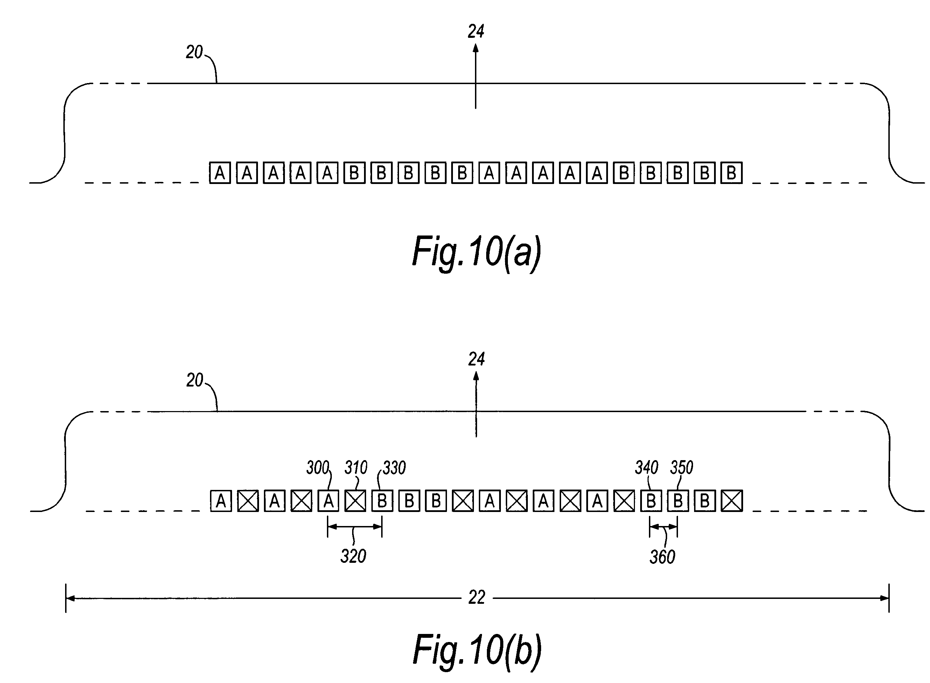

Figure 10 is similar to Figure 9, except that the pattern of reservation of sub-carriers is different. It can be seen that, in each block of sub-carriers in the link wanted by Terminal A, two alternate sub-carriers have been reserved, leaving three sub-carriers remaining used. It can also be seen that in each block of sub-carriers in the link wanted by Terminal B, two sub-carriers have been reserved, leaving the central three sub-carriers remaining used. That is, Terminal A has suffered less of a reduction in its downlink capability as compared to the situation in Figure 9, however Terminal B has now suffered a reduction in its downlink capability as well. Operation in this manner may be advantageous if Terminal A is a higher priority terminal than Terminal B.

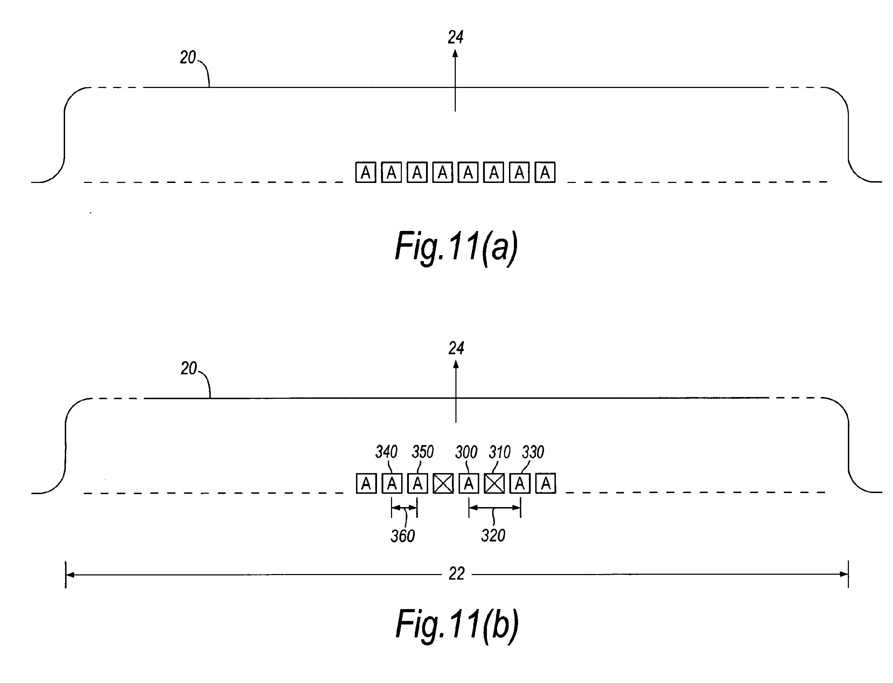

In Figure 11, one block of eight sub-carriers is available for transmission, each sub-carrier being intended for Terminal A. Terminal A has been identified as being a fast moving terminal, and accordingly at least one sub-carrier 300 is used in spectrum (b) and at least one 310 has been reserved. The pattern of reservation of Figure 11 is sub-optimal as only sub-carrier 300 is situated between two reserved sub-carriers. The wanted sub-carrier 300 may be used to transmit all data required by Terminal A so as to maintain the link between Terminal A and the base station.

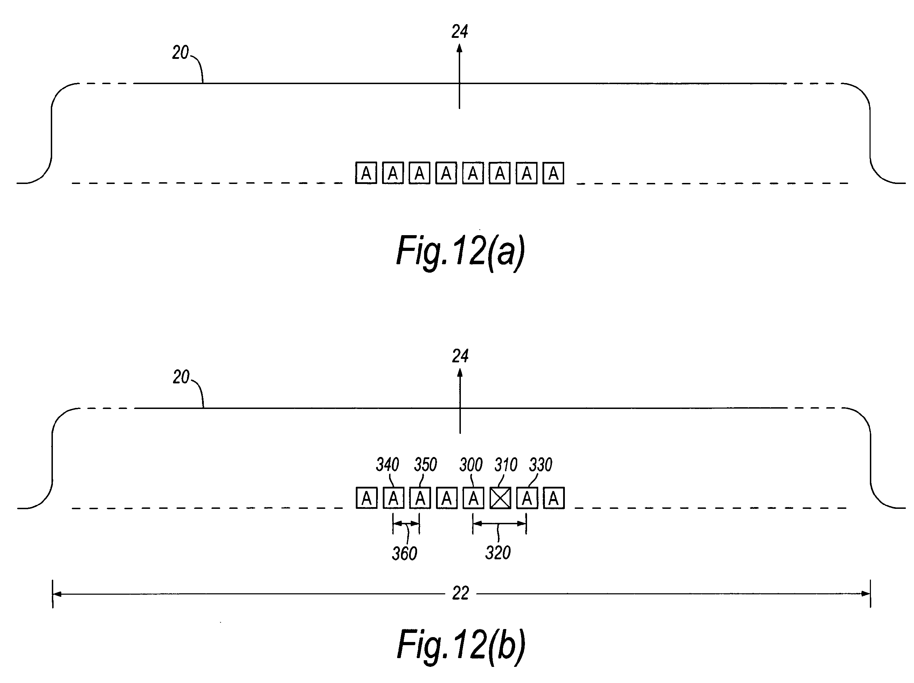

The situation in Figure 12 is similar to that of Figure 11, except that only sub-carrier 310 has been reserved. It is submitted that the operation of the Figure 6 method has reduced the risk of interference for wanted sub-carrier 300, since it now only has one adjacent used sub-carrier rather than two. The benefit of this example of reservation may provide a marginal performance improvement (as compared to if the Figure 6 method was not executed) in OFDM systems, but may provide a more beneficial improvement in systems using other modulation techniques. However, for OFDM systems, the pattern of reservation of Figure 12 is less favourable than that of Figure 11.

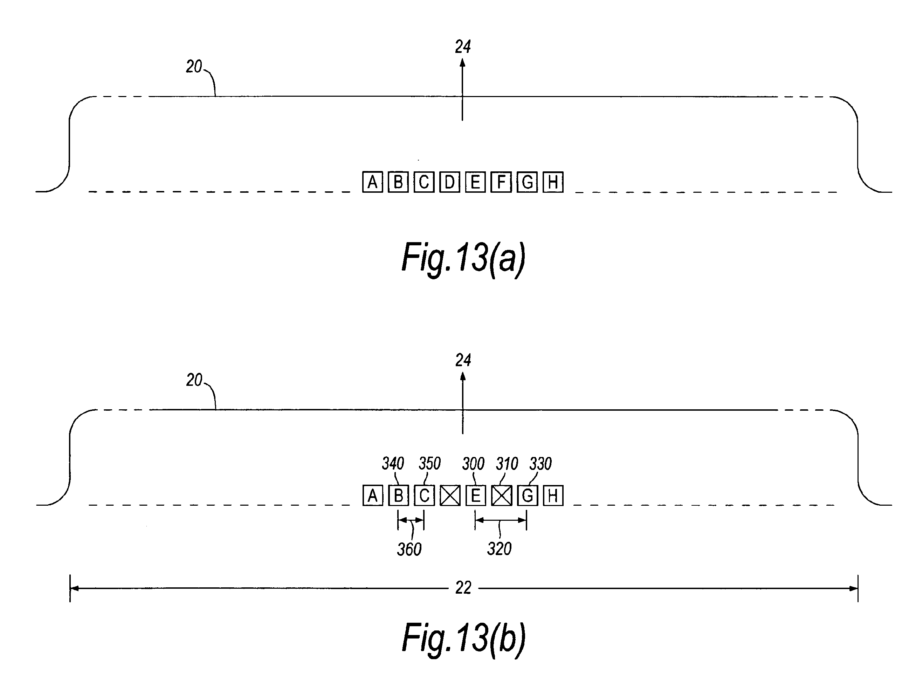

In Figure 13, eight single-sub-carrier blocks are available for transmission, the sub-carriers being intended for Terminals A to H, respectively. Terminal E has been identified as being a fast moving terminal, and accordingly at least one sub-carrier 300 wanted by Terminal E is used in spectrum (b) and at least one 310 has been reserved. In this case, as Terminal E is only provided with one sub-carrier, its downlink capability has been preserved. However, it can be seen that the downlink capability for Terminals D and F has been completely lost. Operation in this manner may be advantageous if Terminal E is a higher priority terminal than Terminals D and F.

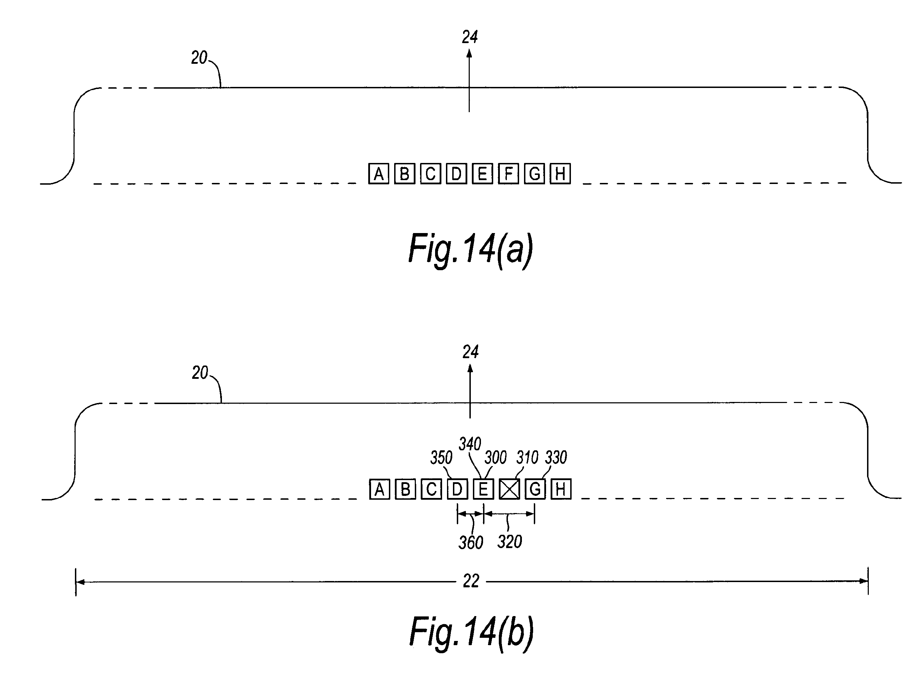

The situation in Figure 14 is similar to that of Figure 13, except that only sub-carrier 310 has been reserved. It is submitted that the operation of the Figure 6 method has reduced the risk of interference for wanted sub-carrier 300, since it now only has one adjacent used sub-carrier rather than two. The benefit of this example of reservation may provide a marginal performance improvement (as compared to if the Figure 6 method was not executed) in OFDM systems, but may provide a more beneficial improvement in systems using other modulation techniques. However, for OFDM systems, the pattern of reservation of Figure 14 is less favourable for Terminal E than that of Figure 14.

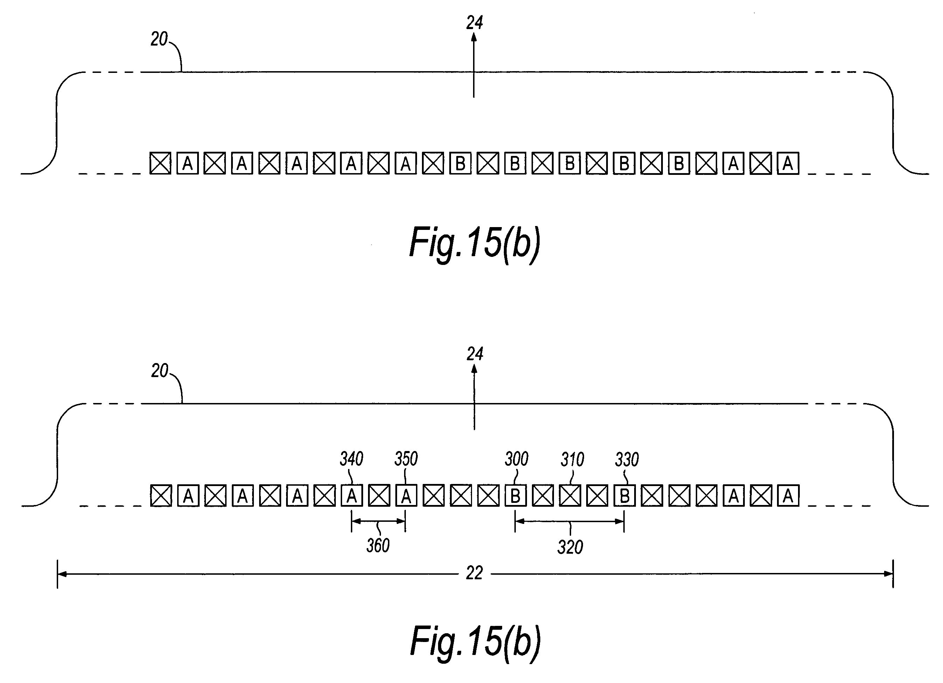

Figure 15 displays an example similar to that of Figure 9, in that blocks of five sub-carriers are available for transmission. However, it can be seen that the available signals are already separated apart by one reserved sub-carrier in spectrum (a). Terminal B has been identified as being a fast moving terminal, and accordingly at least one sub-carrier 300 is used in spectrum (b) and at least one 310 has been reserved. A skilled person may therefore appreciate that embodiments of the present invention are applicable to sub-carrier arrangements other than immediately adjacent arrangements. That is, used or useable sub-carriers with centre frequencies already separated apart by one or more predetermined frequency intervals may still be at risk of substantially interfering with one other, for example if extremely high terminal velocities are considered.

Whilst the transmission of signals from a transmitter 2 (or 200) to a receiver 4 has been hereinbefore described in relation to signals transmitted from a base station 12 to a terminal 14, it will be appreciated by those skilled in the art that such description may apply also to signals transmitted from a terminal 14 to a base station 12.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality of a transmitter embodying the present invention. The invention may also be embodied as one or more device or apparatus programs (e.g. computer programs and computer program products) for carrying out part or all of any of the methods described herein. Such programs embodying the present invention may be stored on computer-readable media, or could, for example, be in the form of one or more signals. Such signals may be data signals downloadable from an Internet website, or provided on a carrier signal, or in any other form.

The present invention is applicable to different types of communication system, however a number of benefits of embodiments of the invention in relation to OFDM systems may be summarised as follows. An increased OFDM system capacity may be achieved for a network containing one or two high velocity mobile terminals as compared with prior-art systems. Fast sub-carrier reservation may be carried out on a per block basis, thereby allowing multi-user interference due to Doppler shifting to be controlled. Increased robustness against inter-symbol interference due to long multi-path delays may be achieved. As sub-carrier reservation can limit the interference between adjacent sub-carriers, the frequency separation between available sub-carriers can be reduced. The OFDM symbol period is inversely proportional to the carrier spacing, and therefore, by reducing the frequency separation between available sub-carriers, the multi-path dispersion in the radio channel can become a smaller fraction of the OFDM symbol period. Hence, larger amounts of multi-path (inter symbol) interference may be thereby tolerated. As above-mentioned, the benefits of embodiments of the present invention enable a common set of OFDM parameters to be used in all suitable frequency bands (e.g. in the case of radio access systems, from 450 MHz to 3.5 GHz).

## Claims

1. A method of reducing a risk of interference in a wireless communication system in which a plurality of mutually orthogonal signals are available to a transmitter for simultaneous transmission to one or more receivers, the method comprising:
determining if one said signal wanted by a particular receiver is at risk of substantial interference from one or more other said signals of the plurality of signals; and
if the wanted signal is determined to be at risk, using the wanted signal for transmission at a transmission time but not using for transmission at the transmission time at least one of said other signals causing said risk so as to provide a first frequency interval between a centre frequency of the wanted signal and a centre frequency of a next said signal used for transmission at the transmission time, the signals being used at the transmission time comprising at least two signals of the plurality of signals whose respective centre frequencies are spaced apart by a second frequency interval smaller than the first frequency interval.

2. A method according to claim 1, wherein said at least two signals whose respective centre frequencies are spaced apart by the second frequency interval are signals intended for one of said receivers other than the particular receiver.

3. A method according to claim 1 or 2, wherein all of the signals intended for use by at least one receiver other than the particular receiver are used for transmission at the transmission time.

4. A method according to any preceding claim, wherein respective centre frequencies of all of the available signals are equally spaced apart by a third frequency interval.

5. A method according to claim 4, wherein the second frequency interval is greater than or equal to the third frequency interval.

6. A method according to any preceding claim, wherein said first frequency interval spans across the centre frequency of at least one of the risk-causing signals that is not used for transmission at the transmission time.

7. A method according to any preceding claim, wherein, if it is determined that such a risk exists, at least two of said risk-causing signals are not used for transmission at the transmission time.

8. A method according to claim 7, wherein the centre frequency of one of the risk-causing signals that is not used for transmission at the transmission time is higher than the centre frequency of the wanted signal, and wherein the centre frequency of another one of the risk-causing signals that is not used for transmission at the transmission time is lower than the centre frequency of the wanted signal.

9. A method according to any preceding claim, comprising:
if the wanted signal is determined to be at risk, using at least a further signal wanted by the particular receiver for transmission at the transmission time, the or each further wanted signal being at risk of substantial interference from one or more further risk-causing signals of the plurality of signals, and, for each said further wanted signal, not using for transmission at the transmission time at least one of said further risk-causing signals causing the risk to that further wanted signal.

10. A method according to any preceding claim, wherein none of said risk-causing signals or said further risk-causing signals is used for transmission at the transmission time.

11. A method according to any preceding claim, wherein three or more signals wanted by the particular receiver and used for transmission at the transmission time are spaced one from the next by the first frequency interval.

12. A method according to any preceding claim, wherein the available signals comprise at least one common signal intended for use by each said receiver, and wherein no signal that puts one of said common signals at risk of substantial interference is used for transmission at the transmission time.

13. A method according to any preceding claim, wherein said risk determination is carried out at regular time intervals.

14. A method according to any preceding claim, wherein said risk determination involves a consideration of a velocity of the particular receiver relative to the transmitter.

15. A method according to claim 14, comprising:
obtaining a measure of the velocity of the particular receiver relative to the transmitter;
wherein in said risk determination, it is determined that said signal wanted by the particular receiver is at risk of substantial interference from one or more other said signals of the plurality of signals if said measure indicates that the velocity of the particular receiver is above a predetermined threshold.

16. A method according to claim 15, comprising:
varying the predetermined threshold based on a smallest frequency interval between the centre frequency of at least the wanted signal and the centre frequency of an adjacent signal of the plurality of signals intended to be used for transmission at the transmission time.

17. A method according to any preceding claim, wherein:
the available signals comprise a plurality of links corresponding respectively to the receivers, each said link comprising all of the available signals intended exclusively for its said corresponding receiver;
each said link comprises a plurality of blocks, the blocks each comprising the same number of signals; and
for each said link, the same pattern of signals used and not used for transmission at the transmission time is employed in each block of the link concerned.

18. A method according to any preceding claim, wherein the system is an OFDM system, and wherein each said signal is an OFDM sub-carrier.

19. A transmitter for use in a wireless communication system and operable to transmit a plurality of available mutually orthogonal signals to one or more receivers, the transmitter comprising:
risk determination means operable to determine if one said signal wanted by a particular receiver is at risk of substantial interference from one or more other said signals of the plurality of signals; and
signal selection means operable, if the wanted signal is determined to be at risk, to use the wanted signal for transmission at a transmission time but to not use for transmission at the transmission time at least one of said other signals causing said risk so as to provide a first frequency interval between a centre frequency of the wanted signal and a centre frequency of a next said signal used for transmission at the transmission time, the signals being used at the transmission time comprising at least two signals of the plurality of signals whose respective centre frequencies are spaced apart by a second frequency interval smaller than the first frequency interval.

20. A system comprising the transmitter of claim 19 and at least one such receiver.

21. A program adapted to be executed by a processor of a transmitter so as to reduce a risk of interference in a communication system in which a plurality of mutually orthogonal signals are available to the transmitter for simultaneous transmission to one or more receivers, the program comprising:
a first program portion operable to cause the transmitter to determine if one said signal wanted by a particular receiver is at risk of substantial interference from one or more other said signals of the plurality of signals; and
a second program portion operable, if the wanted signal is determined to be at risk, to cause the transmitter to use the wanted signal for transmission at a transmission time but not use for transmission at the transmission time at least one of said other signals causing said risk so as to provide a first frequency interval between a centre frequency of the wanted signal and a centre frequency of a next said signal used for transmission at the transmission time, the signals being used at the transmission time comprising at least two signals of the plurality of signals whose respective centre frequencies are spaced apart by a second frequency interval smaller than the first frequency interval.

22. A base station for use in a wireless communication system, said base station comprising the transmitter of claim 19.

23. A user terminal for use in a wireless communication system, said user terminal comprising the transmitter of claim 19.
